# EUROPEAN PATENT APPLICATION

(11) **EP 3 964 740 A1**
(43) Date of publication of application: **09.03.2022**
(21) Application number: 21193920.2
(22) Date of filing: 31.08.2021
(51) Int. Cl.: F16K 11/044, F16K 31/524, F16K 31/56, F16K 39/02

(54) **PRESSING VALVE AND WATER TAP**

(30) Priority: 08.09.2020 CN 202010935964
(71) Applicant: Fujian Xihe Sanitary Ware Technology Co., Ltd., QuanZhou, Fujian 362304 (CN)
(72) Inventor: LIN, Xiaofa, QuanZhou, 362304 (CN); LIN, Xiaoshan, QuanZhou, 362304 (CN); LIU, Qiqiao, QuanZhou, 362304 (CN); DENG, Xiaoqing, QuanZhou, 362304 (CN); YU, Kaishi, QuanZhou, 362304 (CN)
(74) Representative: Argyma

(57) **Abstract**

Disclosed are a pressing valve and a water tap. A valve rod of the pressing valve is driven by a pressing assembly to slide between a first position and a second position along an axial direction of a valve casing to switch water output state of the valve casing, and the valve rod is provided with two sets of pressure-bearing structures along the axial direction of the valve rod. Each set of pressure-bearing structures comprises two pressure-bearing surfaces that are arranged oppositely and are equal in pressure-bearing area. When the valve rod is located in the first position or the second position, water flow passes by one of the two sets of pressure-bearing structures accordingly, such that pressure exerted to the valve rod by the water pressure is balanced, and resistance during the operation is thus reduced.

## Description

### BACKGROUND

### Technical Field

The disclosure relates to the technical field of valves, in particular to a pressing valve and a water tap.

### Description of Related Art

An existing pressing valve usually includes a valve casing, a valve rod, a membrane and a pressing assembly, wherein the pressing assembly is usually similar to the pressing structure adopted in a ball-point pen. By matching a ratchet wheel with a ratchet, the ratchet wheel is pushed to rotate at a certain angle when being pressed and stop between two positions, such that the valve rod can be positioned in a preset position. The membrane is provided with a pilot hole, and a water flow is injected in advance via the pilot hole, such that water pressures of chambers on two sides of the membrane are consistent, and therefore, the pressing resistance is reduced and the pressing hand feeling is guaranteed. However, the pilot-operated pressing valve is likely to fail as the pilot hole is easily plugged, and thus switching of water channels cannot be realized. In order to solve the problem of the piloted-operated pressing valve, a pressing valve structure is disclosed in the prior art, in which the switching of water channels is realized through directly pushing the valve rod to slide by the pressing assembly. But the structure needs to overcome the water pressures during pressing, resulting in poor pressing hand feeling.

### SUMMARY

Below is the summary of a subject matter described in detail herein and the summary is not to limit the protection scope of the claims.

The embodiment of the disclosure provides a pressing valve and a water tap, and the pressing valve includes a valve casing, a valve rod and a pressing assembly. The valve rod of the pressing valve is driven by a pressing assembly to slide between a first position and a second position along a axial direction of a valve casing to switch water output state of the valve casing, and the valve rod is provided with two sets of pressure-bearing structures along the axial direction of the valve rod. Each set of pressure-bearing structures includes two pressure-bearing surfaces that are arranged oppositely and are equal in pressure-bearing area. When the valve rod is located at the first position or the second position, water flow passes by one of the two sets pressure-bearing structures accordingly, such that the pressure exerted to the valve rod by water pressure is balanced, and the resistance during the operation is reduced.

### BRIEF DESCRIPTION OF THE DRAWINGS

In order to describe the technical schemes in the embodiments of the disclosure more clearly, the accompanying drawings to be used in the embodiments will be introduced briefly below. It is obvious that the accompanying drawings described below are some embodiments of the disclosure, and those skilled in the technical field can obtain other drawings according to the accompanying drawings without creative efforts.
Fig. 1 is the structural exploded view of the pressing valve of embodiment 1 provided by the disclosure;
Fig. 2 is a structural schematic view of the pressing assembly in Fig. 1;
Fig. 3 is a structural schematic view of the outer shell in Fig. 1;
Fig. 4 is a structural schematic view of the inner seat in Fig. 1;
Fig. 5 is a structural schematic view of the rod body in Fig. 1;
Fig. 6 is a structural section view of the rod body in Fig. 1;
Fig. 7 is a first structural section view of the pressing valve in Fig. 1;
Fig. 8 is a second structural section view of the pressing valve in Fig. 1;
Fig. 9 is a first structural section view of the pressing valve of embodiment 2 provided by the disclosure;
Fig. 10 is a second structural section view of the pressing valve of embodiment 2 provided by the disclosure.

### Descriptions of main reference numerals:

11 pressing seat; 111 clamping head; 112 positioning protrusion; 12 active button; 13 driven member; 14 pressing spring; 15 reset spring; 16 positioning bead; 17 first spring; 18, second spring; 21 rod body; 211 gasket mounting groove; 212 abutting wall; 213 pressing spring mounting groove; 214 first pressure-bearing surface; 215 second pressure-bearing surface; 216 third pressure-bearing surface; 217 fourth pressure-bearing surface; 22 plugging gasket; 31 inner seat; 311 inner seat water passing port; 312 inner seat chamber; 40 outer shell; 41 water inlet; 42 upper water outlet; 43 lower water outlet; 44 valve cavity; 45 clamping slot; 46 positioning notch.

### DESCRIPTION OF THE EMBODIMENTS

The technical solutions in the embodiments will be clearly and completely described below with reference to the accompanying drawings.

### Embodiment 1

The structure of the pressing valve of embodiment 1provided by the disclosure is described below.

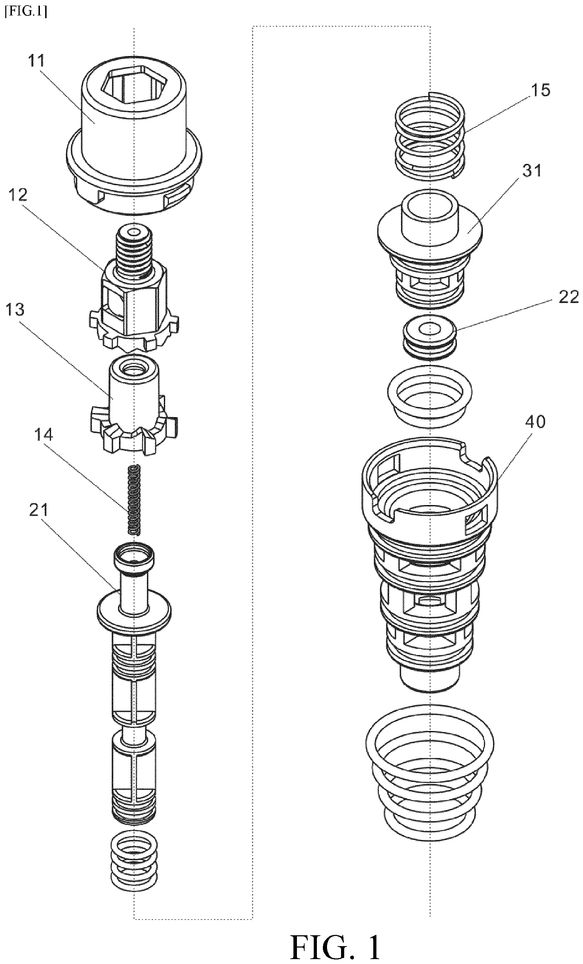

Referring to Fig. 1, the structure of the pressing valve provided by embodiment 1 is shown, and the pressing valve includes the valve casing, the valve rod and the pressing assembly.

The valve casing includes an outer shell 40 and an inner seat 31.

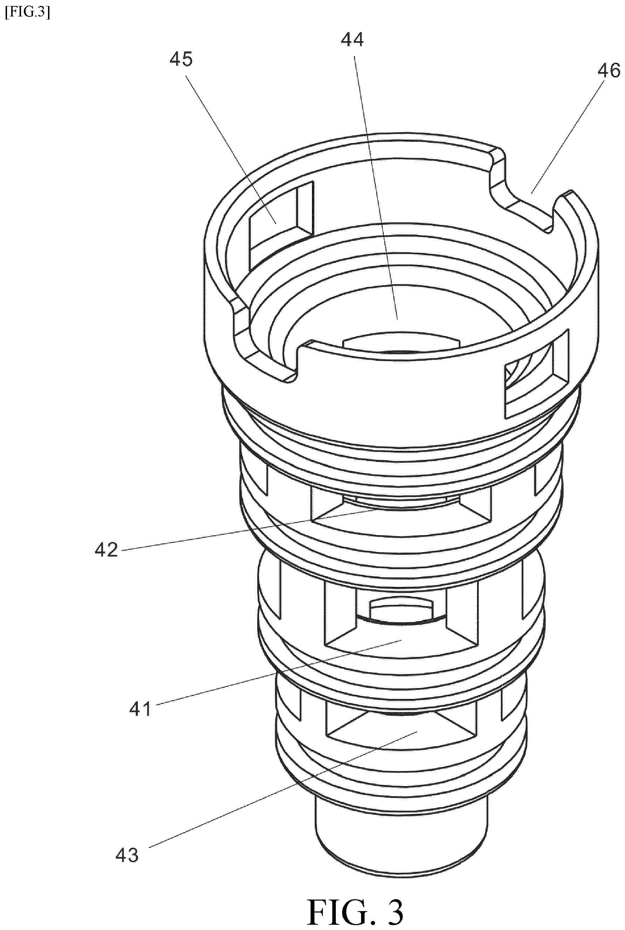

The structure of the outer shell 40 is as shown in Fig. 3, and the outer shell 40 is substantially of a cylindrical structure, the upper end is open and the lower end is closed, and a valve cavity 44 is formed internally. A middle position of the outer shell 40 is provided with a plurality of water inlets 41 along a circumferential direction, above the water inlets 41, the outer shell 40 is provided with a plurality of upper water outlets 42 and below the water inlets 41, the outer shell 40 is provided with a plurality of lower water outlets 43.An outer wall of the outer shell 40 between the water inlet 41 and the upper water outlets 42 is provided with a sealing ring, an outer wall of the outer shell 40 between the water inlet 41 and the lower water outlets 43 is provided with a sealing ring, and an outer wall of the outer shell 40 above the upper water outlets 42 is provided with a sealing ring. When being connected to an external input water pipeline or an external output water pipeline, communication between a plurality of water channels are cut off by means of the sealing rings. An upper end of the outer shell 40 is provided with a clamping slot 45, and the clamping slot 45 is a through hole penetrating through a wall surface of the outer shell 40. The upper end of the outer shell 40 is provided with a positioning notch 46, and the positioning notch 46 is formed in a side wall of the top end of the outer shell 40 and facing upward. An inner wall of an upper position of the valve cavity 44 of the outer shell 40 is provided with a step surface along the circumferential direction, and the step surface is facing upwards. An inner wall, between the water inlet 41 and the lower water outlets 43, of the valve cavity 44 of the outer shell 40 is provided with another step surface along the circumferential direction, the step surface forms a water passing surface, and communication between the water inlet 41 and the lower water outlets 43 can be cut off by plugging the water passing surface.

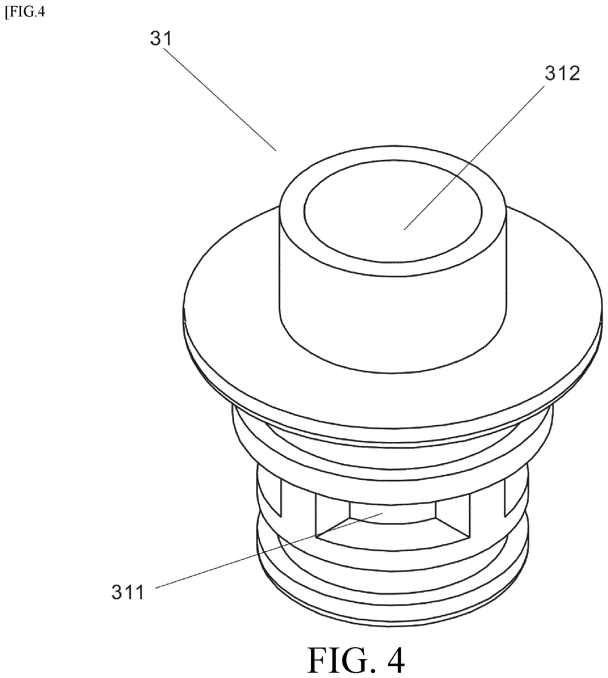

The structure of the inner seat 31 is as shown in Fig. 4, and the inner seat 31 is substantially of a cylindrical structure integrally. The upper and lower ends are open, an inner seat chamber 312 is formed in the inner seat, the inner seat chamber 312 is the sliding cavity of the inner seat 31, and the inner seat chamber 312 is of a regular cylinder integrally. A middle position of the inner seat 31 is provided with a plurality of inner seat water passing ports 311 in a wall surface along the axial direction, and the outer walls of the inner seat 31 above and below the inner seat water passing ports 311 are provided with two sealing rings respectively. An upper position of the inner seat 31 is provided with a flange outward along the circumferential direction in a protruding manner. A water passing surface is formed at a lower edge of the inner seat 31, and communication between the inner seat water passing ports 311 and the lower end port of the inner seat 31 can be cut off by plugging the water passing surface.

An outer diameter of the inner seat 31 is matched with an inner diameter of a part of the valve cavity 44 of the outer shell 40, and the inner seat 31 is inserted into and connected to the valve cavity 44 of the outer shell 40and is overlapped to the step surface in the upper position in the outer shell 40 via the flange on the inner seat 31.When the inner seat 31 is assembled in the outer shell 40, the inner seat water passing ports 311 is aligned with the upper water outlets 42 in the outer shell 40, and the sealing rings below and above the inner seat water passing ports 311 enable the inner seat water passing ports 311 to be only communicated with the upper water outlets 42.

The valve rod includes a rod body 21 and a plugging gasket 22.

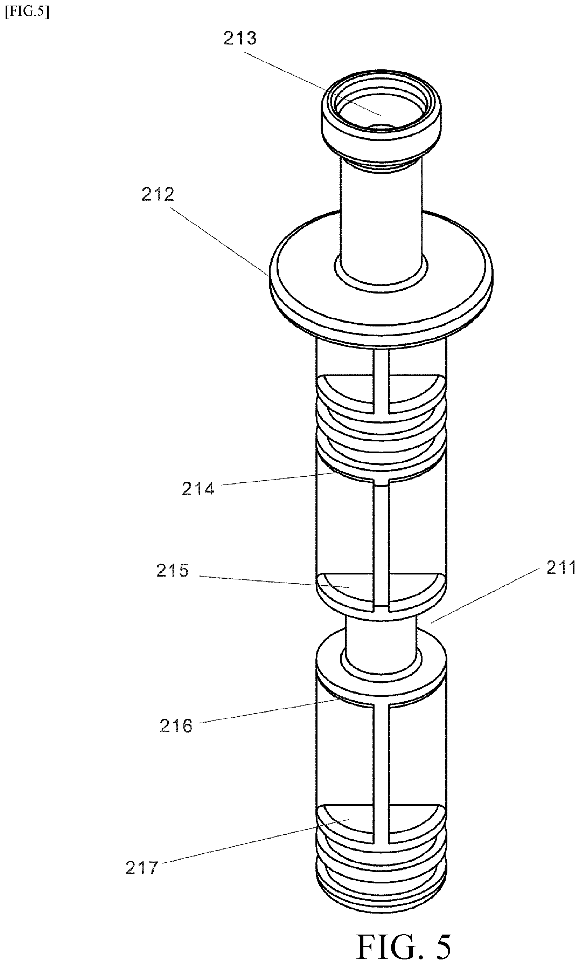

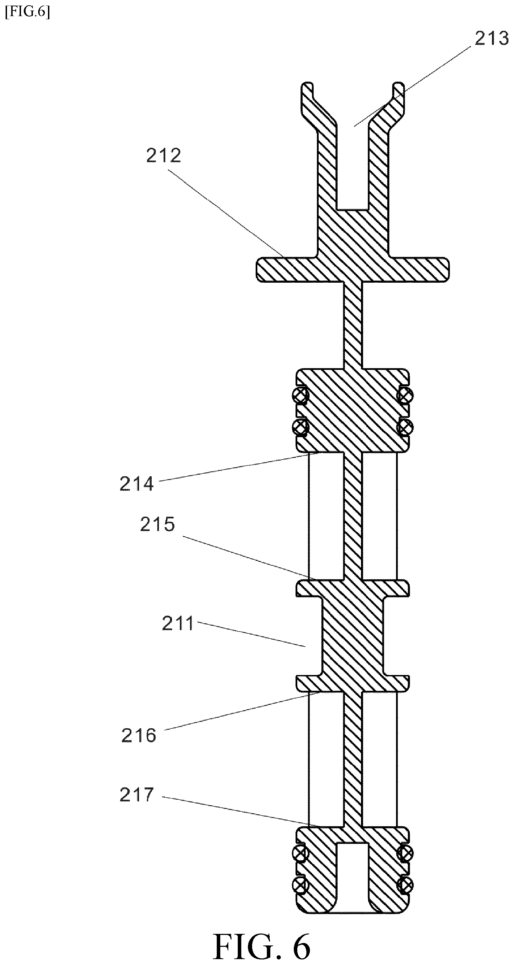

The structure of the rod body 21 is as shown in Fig. 5 and Fig. 6, the rod body is substantially of a cylindrical structure integrally, and a middle position of the rod body 21 is provided with a gasket mounting groove 211, the gasket mounting groove 211 is of an annular groove structure which is arranged along the circumferential direction of the rod body 21 and is sunken toward the radial direction of the rod body 21, and the gasket mounting groove 211 forms two side walls in the axial direction of the rod body 21 respectively. By forming the gasket mounting groove 211, it is convenient to mount the plugging gasket 22 onto the rod body 21. Pressure-bearing structures are arranged above and below the gasket mounting groove 211, and each of the pressure-bearing structures includes two pressure-bearing surfaces that are arranged oppositely and are equal in pressure-bearing area. The pressure-bearing structure above the gasket mounting groove 211 includes the first pressure-bearing surface 214 and the second pressure-bearing surface 215, and the pressure-bearing structure below the gasket mounting groove 211 includes the third pressure-bearing surface 216 and the fourth pressure-bearing surface 217.The pressure-bearing surfaces can be regarded as wall surfaces formed by hollowing the main body of the rod body 21 partially, and planes of the wall surfaces are axially perpendicular to the rod body 21 and are arranged correspondingly in pairs. When water passes every time, the water passes by the pressure-bearing surfaces of only one pressure-bearing structure and does not pass by the pressure-bearing surfaces of the other pressure-bearing structure.

An upper position of the rod body 21 is provided with an abutting wall 212, and the abutting wall 212 is formed by a flange structure extending outwards along the radial direction of the rod body 21. A pressing spring mounting groove 213 is formed above the abutting wall 212, and the pressing spring mounting groove 213 is formed in such a way that the top end of the rod body 21 sinks downwards along the axial direction of the rod body.

The structure of the plugging gasket 22 is as shown in Fig. 1, and the plugging gasket 22 is made from a rubber material, and is of a flat cylindrical structure. A center position of the plugging gasket 22 is provided with a through hole along the axial direction. The through hole is used for mounting and fixing the plugging gasket 22.

The plugging gasket 22 is arranged in the gasket mounting groove 211 of the rod body 21 in a sleeved manner and is confined by the groove wall of the gasket mounting groove 211. The width of the gasket mounting groove 211 is matched with the thickness of the plugging gasket 22, and the diameter of the rod body 21 in the position of the gasket mounting groove 211 is matched with the diameter of the through hole in the center of the plugging gasket 22.After the plugging gasket 22 is mounted onto the rod body 21, the outer edge of the plugging gasket 22 is provided with a solid structure partially protruding out of the rod body 21 .

The pressing assembly includes a pressing seat 11, an active button 12, a driven member 13, a pressing spring 14 and a reset spring 15.

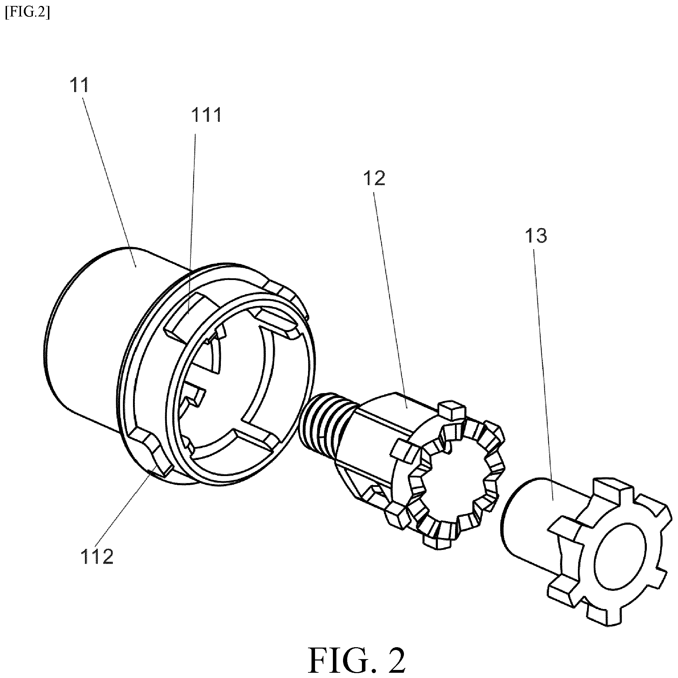

The structure of the pressing seat 11 is as shown in Fig. 1 and Fig. 2 and is substantially of a cylindrical structure integrally, the upper and lower ends are open and the interior is hollow, and the outer side wall surface in the lower position is provided with a clamping head 111 and a positioning protrusion 112; the lower edge of the clamping head 111 is a bevel, and the top end of the clamping head 111 is a plane, thus achieving fixed installation of the pressing seat 11. The positioning protrusion 112 protrudes relative to the outer wall surface of the pressing seat 11 and is used for positioning the pressing seat 11 in advance while mounting the pressing seat 11, and thereby preventing malposition during the mounting process. The inner side wall surface of the pressing seat 11 is provided with several position-limiting modules protruding relative to the inner side wall surface. Each of the position-limiting modules includes a guide slot extending along the axial direction of the pressing seat 11, a stop slot extending along the axial direction of the pressing seat 11 is formed between two position-limiting modules, and a lower end of each of the position-limiting modules is provided with a zigzag bevel structure. The stop slot forms a first stop position of the pressing seat 11 and the zigzag structure at the lower end of the position-limiting module forms a second stop position of the pressing seat 11. At the upper end opening of the pressing seat 11, two protrusion structures inwards along the radial direction of the pressing seat 11 are provided at two symmetrical positions.

The structure of the active button 12 is as shown in Fig. 1 and Fig. 2, forms an input end of the pressing assembly and is substantially of a cylindrical structure integrally. Two symmetrical positions on the outer side wall of the active button 12 are provided with two sliding chutes along the axial direction of the active button 12, the lower position of the active button12 is provided with several guide slide blocks along the circumferential direction, and the bottom end position is provided with several zigzag bevels along the circumferential direction, thereby forming the ratchet structure of the active button. Meanwhile, the active button 12 has a hollow interior and an opening in the lower end, thereby forming a chamber can be accessed through the opening in the lower end. The chamber formed by the active button 12 is further provided with the spring mounting groove.

The structure of the driven member 13 is as shown in Fig. 1 and Fig. 2, forms an output end of the pressing assembly and is substantially of a cylindrical structure in the main body portion. A lower position of the main body portion is provided with several outward lugs along the circumferential direction, and the upper sides of the lugs are bevels inclining toward a same side, thereby forming a bevel structure of the driven member 13. The driven member 13 has a hollow interior and openings in upper and lower ends, thereby forming a through hole penetrating through the driven member13..

The pressing assembly adopts the pressing structure that commonly used in a ball-point pen, and the stop position of the driven member 13 can be switched by way of pressing the active button 12, such that the position of the valve rod is changed. The pressing spring 14 can drive the active button 12 to reset, and the reset spring 15 can drive the valve rod to reset.

Generally speaking, a connecting relationship among the components is described below.

The pressing spring 14 is located between the rod body 21 and the active button 12, one end of the pressing spring 14 is inserted into the pressing spring mounting groove 213 at the top end of the rod body 21 and the other end of the pressing spring 14 penetrates through the driven member 13 and is inserted into the spring mounting groove at the lower portion of the active button 12 to reset the active button 12.

The reset spring 15 is located between the rod body 21 and the inner seat 31, one end of the reset spring 15 abuts against the top end surface of the inner seat 31 and the other end of the reset spring 15 abuts against the lower side surface of the abutting wall 212 of the rod body 21 to reset the rod body 21.

The pressing assembly is mounted in the valve casing, and the output end of the pressing assembly moves between the first stop position and the second stop position relative to the valve casing when being pressed. Specifically, the pressing seat 11 of the pressing assembly is fixedly connected to the outer shell 40 of the valve casing, the positioning protrusion 112 of the pressing seat 11 corresponds to the positioning notch 46 in the outer shell 40 and is matched with the same in dimension, and the positioning protrusion 112 can be inserted into the positioning notch 46; the clamping head 111 of the pressing seat 11 can be clamped to the clamping slot 45 in the outer shell 40, such that the pressing seat 11 is fixedly mounted in the upper end of the outer shell 40. Meanwhile, after the pressing seat 11 is fixedly mounted in the upper end position of the outer shell 40, the lower edge of the pressing seat 11 abuts against the flange of the inner seat 31, and thus, the inner seat 31 is fixed in the valve cavity 44 of the outer shell 40.

The active button 12 is pressed, the ratchet structure of the active button 12 will push the driven member 13 to rotate, and the driven member 13 moves in the position-limiting modules of the pressing seat 11 by way of rotation, such that the driven member 13 is switched between the first stop position and the second stop position, and the axial height of the first stop position and the axial height of the second stop position are different. When the driven member 13 is at the first stop position, the rod body 21 is at a first position under the action of the reset spring 15 and when the driven member 13 is at the second stop position, the abutting wall 212 of the rod body 21 is pushed by the driven member13 such that the rod body 21 reaches and is kept in a second position.

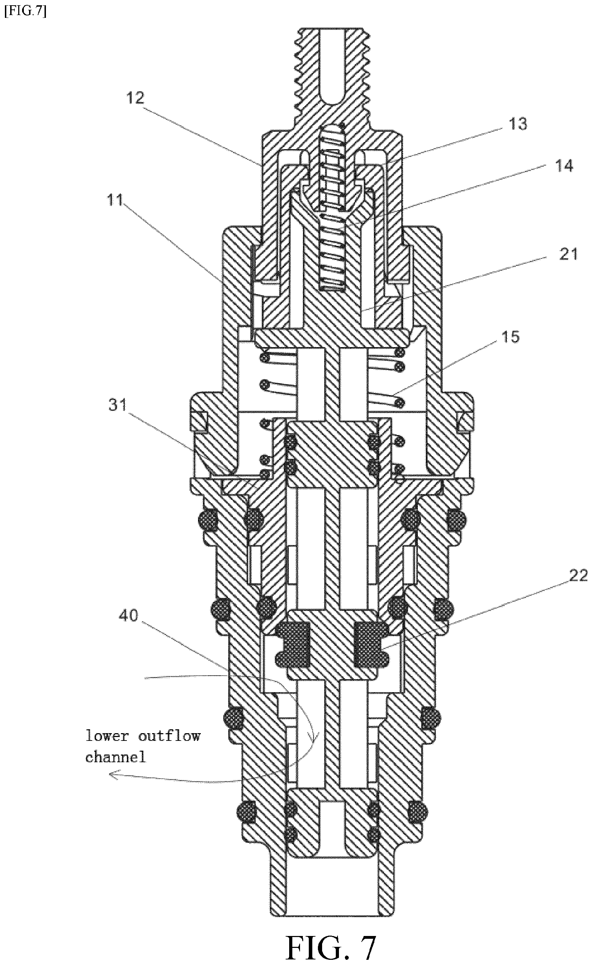

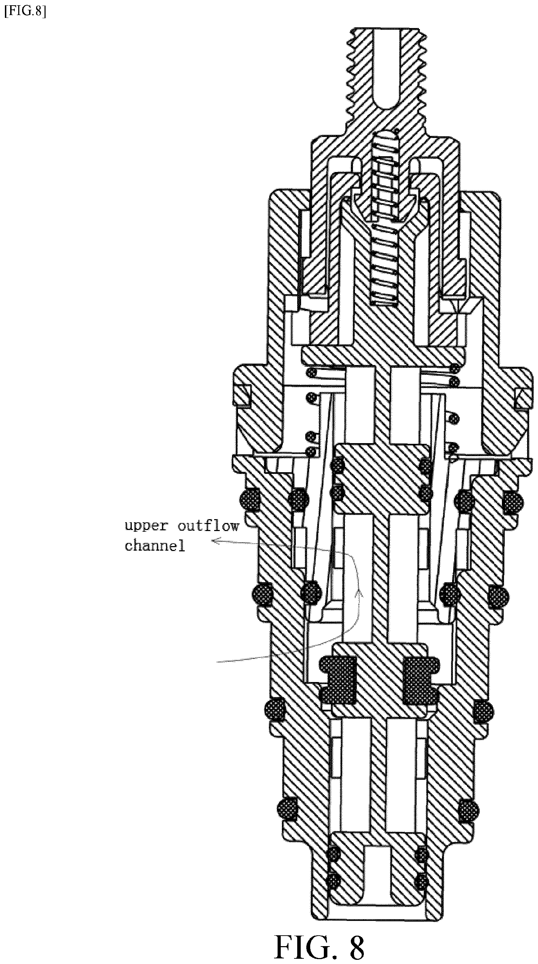

The valve rod slides between the first position and the second position along the axial direction of the valve casing, so as to switch the water output state of the valve casing. Specifically, the valve casing is provided with the upper water passing surface between the water inlet 41 and the upper water outlet 42, and the lower water passing surface between the water inlet 41 and the lower water outlet 43 respectively; and the rod body 21 slides between the first position and the second position along the axial direction of the valve casing, and when the rod body 21 is switched between the first position and the second position, the plugging gasket plugs one of the water passing surfaces of the valve casing. In the embodiment, the rod body 21 is inserted into the sliding cavity formed by the inner seat 31 and slides between the first position and the second position along the axial direction of the sliding cavity. When the rod body 21 is at the first position, as shown in Fig. 7, the plugging gasket 22 plugs the upper water passing surface formed by the inner seat 31, the water inlet 41 is communicated with the lower water outlet 43 and the lower outflow channel is available; when the rod body 21 is at the second position, as shown in Fig. 8, the plugging gasket 22 plugs the lower water passing surface formed by the outer shell 40, the water inlet 41 is communicated with the upper water outlet 42 and the upper outflow channel is available.

During assembly, the plugging gasket 22 is arranged on the rod body 21 in a sleeved manner first, then the reset spring 15 is mounted on the inner seat 31, then the valve rod is inserted into the inner seat chamber 312 of the inner seat 31 from top to bottom, the reset spring 15 abuts against the rod body 21, then the pressing spring 14 is inserted into the pressing spring mounting groove 213 in the rod body 21, then the driven member 13 is arranged at the top end of the rod body 21 in a sleeved manner, then the active button 12 is mounted, and then the pressing seat 11 is clamped and fixed to the outer shell 40.

### Embodiment 2

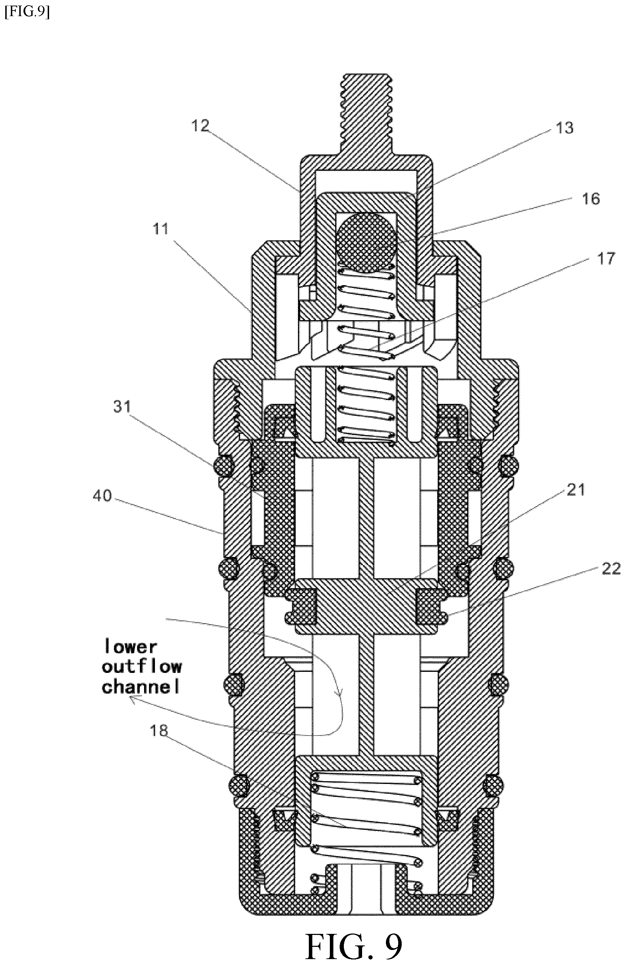

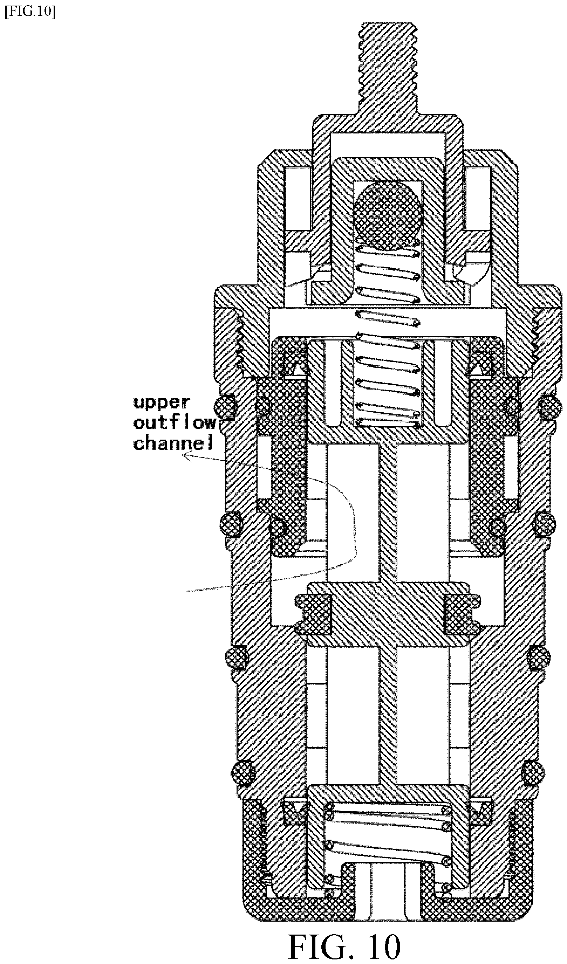

In addition, the disclosure further provides embodiment 2. The structure of embodiment 2 is as shown in Fig. 9 and Fig. 10, and the difference between embodiment 2 and embodiment 1 primarily lies in difference in the rod body 21 and the pressing assembly.

As shown in Fig. 9 and Fig. 10, the upper and lower ends of the rod body 21 are provided with the first mounting groove and the second mounting groove respectively, and both the first mounting groove and the second mounting groove are formed by sinking inwards along the axial direction of the rod body 21.

As shown in Fig. 9 and Fig. 10, the pressing assembly in embodiment 2 includes the pressing seat 11, the active button 12, the driven member 13, the positioning bead 16, the first spring 17 and the second spring 18.

The structures of the pressing seat 11 and the active button 12 are substantially similar with those in embodiment 1, and no detailed description will be made therein.

The driven member 13 forms the input end of the pressing assembly and is substantially of a cylindrical structure in the main body portion. A lower position of the main body portion is provided with four outward protruding lugs along the circumferential direction, and the upper sides of the lugs are bevels inclining toward a same side, thereby forming a bevel structure of the driven member 13. The driven member 13 has a hollow interior and an opening at the lower end, thereby forming a chamber can be accessed from the lower end. The chamber forms the driven member mounting groove.

The positioning bead 16 is a round ball member.

The active button 12 is slidably connected to the pressing seat 11 and can extend out from the upper opening of the pressing seat 11, and the sliding chutes in two sides of the active button 12 correspond to the two protrusion structures on the pressing seat 11 in position, such that the active button 12 can be defined to slide along a determined route. Meanwhile, the guide slide block on the active button 12 further corresponds to the guide slot in the position-limiting module on the inner wall surface of the pressing seat 11, such that the guide slide block can slide along the guide slot. The main body portion of the driven member 13 can be inserted into the chamber of the active button 12 from the lower end of the active button 12, and the main body portion of the driven member 13 and the chamber of the active button 12are matched in dimension. The ratchet structure arranged at the lower end of the active button 12 corresponds to the bevel structure on the driven member 13, the ratchet structure leans against the driven member 13, such that the sliding action of the active button 12 relative to the pressing seat 11 could be converted into the rotating action of the driven member 13 relative to the pressing seat 11. The bevel structure on the driven member 13 is further used for switching between the two stop positions of the pressing seat 11. When the bevel structure is located at the stop groove, the driven member 13 is at a higher position; and when the bevel structure abuts against the zigzag structure at the lower end of the position-limiting module, the driven member 13 is at a lower position.

The first spring 17 acts between the output end of the pressing assembly and the first end of the valve rod. Specifically, one end of the first spring 17 extends into the driven member mounting groove of the driven member 13, the first spring 17 extends into the end portion of the driven member mounting groove to abut against the positioning bead 16, and the positioning bead 16 abuts against the bottom wall of the driven member mounting groove, such that the positioning bead 16 is located between the end portion of the first spring 17 and the bottom wall of the driven member mounting groove. The lower end portion of the first spring 17 extends into the first mounting groove of the rod body 21, such that two ends of the first spring 17 are confined by the side walls of the driven member mounting groove and the first mounting groove respectively, thereby the first spring 17 is prevented from being displaced or falling off.

The second spring 18 acts between the valve casing and the second end of the valve rod and is acted on the valve rod in a direction opposite to that of the first spring 17. Specifically, the upper end portion of the second spring 18 extends into the second mounting groove of the rod body 21 and the lower end portion of the second spring abuts against the inner side bottom wall of the outer shell 40. By mounting the second spring 18 in the second mounting groove, the second spring 18 can be prevented from being displaced or falling off.

The active button 12 is pressed, the ratchet structure of the active button 12 will push the driven member 13 to rotate, and the driven member 13 moves in the position-limiting modules of the pressing seat 11 by way of rotation, such that the driven member 13 is switched between the first stop position and the second stop position, and the axial height of the first stop position and the axial height of the second stop position are different, and therefore, pressure exerted to the first spring 17 is also different.

When the output end of the pressing assembly is at the first stop position, i.e., the driven member 13 is at the higher position, the pressure exerted to the first spring 17 is relative small, such that the elastic force of the first spring 17 is smaller than the elastic force of the second spring 18, such that the valve rod is stopped in the first position as shown in the Fig. 9. At the time, the pressed stroke of the first spring 17 is shorter, the second spring 18 pushes the rod body 21 upwards, the elastic force of the first spring 17 is smaller than the elastic force of the second spring 18, and meanwhile, the second spring 18 overcomes gravity of the valve rod and pushes the rod body 21 to move upwards to the first position till the plugging gasket 22 abuts against the upper water passing surface, and therefore, the valve rod is stopped at the first position; when the output end of the pressing assembly is at the second stop position, i.e., the driven member 13 is at the lower position, the pressure exerted to the first spring 17 is relative big, such that the elastic force of the first spring 17 is greater than the elastic force of the second spring 18, such that the valve rod is stopped at the second position as shown in Fig. 10. At the time, the pressed stroke of the first spring 17 is longer, the elastic force of the first spring 17 is larger than the elastic force of the second spring 18, such that the first spring 17 overcomes resistance of the second spring 18 and pushes the rod body 21 to move downward to the second position till the plugging gasket 22 abuts against the lower water passing surface, such that the valve rod is stopped at the second position.

The pressing structure of the pressing assembly in embodiment 2 is the same as the pressing structure commonly used in a ball-point pen, and the pressing assembly is provided with the first spring 17 and the second spring 18. A force is applied to the valve rod from opposite directions by using two springs, and the valve rod can be switched between the first position and the second position as the first spring 17 and the second spring 18 are different in elastic force at different positions. By means of action of the two springs, the stress suffered by the valve rod is delayed, such that the pressing hand feeling is improved. In addition, as a result of damping action of the springs, stress deformation of the valve rod under water flow impact can be reduced, and the service life of the valve rod is prolonged.

In addition, by arranging the positioning bead 16, as the driven member 13 in the pressing assembly will rotate and the first spring 17 needs to act on the driven member 13, by arranging the positioning bead 16 between the driven member 13 and the first spring 17, the first spring 17 can act on the driven member 13 in a fixed position, and damage to the first spring 17during the rotation of the driven member 13 can be prevented.

In addition, the disclosure further provides a water tap. The water tap includes a faucet body, the faucet body is connected with external water supply and is provided with two output water pipelines, the faucet body is internally provided with the pressing valve described above, the input water pipeline on the faucet body can be hermetically communicated with the water inlet 41 of the pressing valve by means of the sealing ring arranged on the outer shell 40 of the pressing valve, and the two output water pipelines also can be hermetically communicated with the upper water outlet 42 and the lower water outlet 43 of the pressing valve respectively. By adopting the pressing valve described above, the water tap is capable of switching water outflow channels through the pressing valve.

The disclosure provides a pressing valve and a water tap. By arranging two symmetrical pressure-bearing structures, each of the pressure-bearing structures is provided with two symmetrical pressure-bearing surfaces, such that when water passes by the pressing valve, water pressures suffered by the corresponding two pressure-bearing surfaces are counteracted mutually, and therefore, the action force of the water pressures to the valve rod is eliminated, the resistance received during the pressing operation is reduced and the pressing hand feeling of the pressing valve is guaranteed.

The foregoing descriptions in the specification and embodiments serve to explain the protection scope of the disclosure, but do not constitute a limitation on the protection scope of the disclosure. Through inspiration provided by the disclosure or the embodiments, modifications, equivalents, or other improvements of the embodiments or part of the technical features of the disclosure obtained by a person having ordinary skill in the art by combining general knowledge and common technical knowledge in the art and/or related art through logical analyses, reasoning, or limited tests fall within the protection scope of the disclosure.

## Claims

1. A pressing valve, comprising a valve casing, a valve rod and a pressing assembly, the valve rod being driven by the pressing assembly to slide between a first position and a second position along an axial direction of the valve casing to switch water output state of the valve casing, **characterized in that**
the valve rod is provided with two sets of pressure-bearing structures (214,215; 216,217) along the axial direction of the valve rod, and each set of pressure-bearing structures (214,215; 216,217) comprises two pressure-bearing surfaces that are arranged oppositely and are equal in pressure-bearing area; and
when the valve rod is located in the first position or the second position, water flow passes by one of the two sets of pressure-bearing structures (214,215; 216,217) accordingly.

2. The pressing valve according to claim 1, **characterized in that** the valve casing is provided with a water inlet (41) and two water outlets and when the valve rod is located in the first position or the second position, the water inlet (41) is in communication with one of the two water outlets accordingly.

3. The pressing valve according to claim 2, **characterized in that** the valve casing is provided with two water passing surfaces between the water inlet (41) and the two water outlets respectively; the valve rod comprises a rod body (21) and a plugging gasket (22); the valve rod slides between the first position and the second position along the axial direction of the valve casing; the plugging gasket (22) is fixedly arranged on the rod body (21) and plugs one of the water passing surfaces when the rod body (21) is switched between the first position and the second position; and the pressure-bearing structures are located on two sides of the plugging gasket (22) respectively.

4. The pressing valve according to claim 3, **characterized in that** the rod body (21) is provided with a gasket mounting groove (211), and the plugging gasket (22) is arranged in the gasket mounting groove (211) in a sleeved manner and is confined by a groove wall of the gasket mounting groove (211).

5. The pressing valve according to claim 4, **characterized in that** the valve casing comprises an outer shell (40) and an inner seat (31), the inner seat (31) being fixedly arranged in the outer shell (40) and a center portion of the inner seat (31) forming a sliding cavity; and the rod body (21) is inserted into the sliding cavity and slides between the first position and the second position along the axial direction of the sliding cavity.

6. The pressing valve according to any one of claims 1-5, **characterized in that** the pressing assembly comprises a pressing seat (11), an active button (12), a driven member (13), a pressing spring (14) and a reset spring (15), wherein
the pressing seat (11) is fixedly arranged in the valve casing, and the inner wall of the pressing seat (11) is provided with several sets of first stop positions and second stop positions at different axial heights along the circumferential direction;
the active button (12) slides along the axial direction of the pressing seat (11) and a bottom of the active button (12) is provided with a ratchet structure;
the driven member (13) is rotatably connected to the active button (12), and a portion of the driven member (13) corresponding to the ratchet structure of the active button (12) is provided with a bevel structure along the circumferential direction of the driven member (13);
the pressing spring (14) acts between the valve rod and the active button (12);
the reset spring (15) acts between the valve rod and the valve casing, and an action direction of the reset spring (15) is opposite to an action direction of the driven member to the valve rod; and
the active button (12) leans against the driven member (13) when being pressed and drives the driven member (13) to rotate, so as to switch the driven member (13) between the first stop position and the second stop position, and the driven member (13) pushes against the valve rod, so as to drive the valve rod to switch between the first position and the second position.

7. The pressing valve according to any one of claims 1-5, **characterized in that** the pressing assembly comprises a pressing seat (11), an active button (12), a driven member (13), a first spring (17) and a second spring (18), wherein
the pressing seat (11) is fixedly arranged in the valve casing, and the inner wall of the pressing seat (11) is provided with several sets of first stop positions and second stop positions at different axial heights along the circumferential direction;
the active button (12) slides along the axial direction of the pressing seat (11) and a bottom of the active button (12) is provided with a ratchet structure;
the driven member (13) is rotatably connected to the active button (12), and a portion of the driven member (13) corresponding to the ratchet structure of the active button (12) is provided with a bevel structure along the circumferential direction of the driven member (13);
the first spring (17) acts between the valve rod and the driven member (13);
the second spring (18) acts between the valve rod and the valve casing, and an action direction of the second spring (18) is opposite to an action direction of the first spring (17) to the valve rod; and
the active button (12) leans against the driven member (13) when being pressed and drives the driven member (13) to rotate, so as to switch the driven member (13) between the first stop position and the second stop position, and when the driven member (13) is in the first stop position, the first spring (17)is compressed to a state in which an elastic force of the first spring (17) is smaller than an elastic force of the second spring (18), so as to enable the valve rod to stop in the first position, and when the driven member (13) is in the second stop position, the first spring (17) is compressed to a state in which the elastic force of the first spring (17) is greater than the elastic force of the second spring (18), so as to enable the valve rod to stop in the second position.

8. The pressing valve according to claim 7, **characterized in that** the pressing assembly further comprises a positioning bead (16), the driven member (13) is provided with a driven member mounting groove for mounting the first spring (17), and the positioning bead (16) is located between an end portion of the first spring (17) in the driven member mounting groove and a bottom wall of the driven member mounting groove.

9. The pressing valve according to claim 8, **characterized in that** two ends of the valve rod are respectively provided with a first mounting groove and a second mounting groove that sink along an axial direction of the valve rod, and the first spring (17) and the second spring (18) extend in the first mounting groove and the second mounting groove respectively and a but against the bottom walls of the first mounting groove and the second mounting groove respectively.

10. An water tap, comprising a faucet body, the faucet body being connected with external water supply and being provided with at most two outlet water pipelines, **characterized in that** the faucet body is internally provided with the pressing valve according to any one of claim 1 to claim 9, the pressing valve is provided with a water inlet (41) and at most two water outlets, the water inlet (41) is connected with external water supply, and the water outlets are hermetically communicated with the two outlet water pipelines in a one-to-one correspondence manner.
